(19) Europäisches Patentamt

European Patent Office

Office européen des brevets

(11) EP 0 483 665 B1

(12) **EUROPÄISCHE PATENTSCHRIFT**

(45) Veröffentlichungstag und Bekanntmachung des Hinweises auf die Patenterteilung:
**16.04.1997 Patentblatt 1997/16**

(51) Int Cl.⁶: **C08J 11/04**
// C08L67:00

(21) Anmeldenummer: **91118112.1**

(22) Anmeldetag: **24.10.1991**

(54) **Verfahren zur Aufbereitung thermisch beanspruchter Polyester-Abfälle**

Processing of thermally stressed waste polyester

Procédé de récupération de déchets de polyester fatigués thermiquement

(84) Benannte Vertragsstaaten:
**AT CH DE GB LI LU**

(30) Priorität: **30.10.1990 DE 4034459**

(43) Veröffentlichungstag der Anmeldung:
**06.05.1992 Patentblatt 1992/19**

(73) Patentinhaber: **HOECHST AKTIENGESELLSCHAFT**
**65926 Frankfurt am Main (DE)**

(72) Erfinder: **Deiringer, Günther, Dr.**
**W-8261 Kastl (DE)**

(56) Entgegenhaltungen:
EP-A- 0 336 520          DE-A- 1 420 366
DE-A- 2 904 020          GB-A- 2 032 933

**Beschreibung**

Die Erfindung betrifft ein Verfahren zur Aufbereitung thermisch beanspruchter Polyester-Abfälle für die Wiederverwendung bei der Produktion von hochwertigen PET-Kunststoffartikeln, bei dem die Polyester-Abfälle während der Aufbereitung gehäckselt und aufgeschmolzen werden, die Schmelze durch Filtrieren von Verschmutzungen befreit wird und die Molmasse der filtrierten Schmelze durch eine Schmelzenachkondensation gegenüber der Ausgangsmolmasse der filtrieten Schmelze erhöht wird.

Ein Verfahren der eingangs beschriebenen Art ist aus der GB-A-2 032 933 bekannt, bei dem die Viskositätszahl bzw. die "intrinsic viscosity" von Polymerabfällen mit niedriger Schüttdichte erhöht wird. Dazu werden die Polymerabfälle in feinverteilter Form mittels einer Schnecke verdichtet und der komprimierte Abfall einem Extruder mit zwei Schnecken zugeführt, in welchem der Abfall aufgeschmolzen und Feuchtigkeit sowie flüchtige Verunreinigungen entfernt werden. Das aufgeschmolzene Polymer wird unter reduziertem Druck nachkondensiert, um seine Viskositätszahl auf den gewünschten Wert anzuheben und die flüchtigen Verunreinigungen zu zersetzen, so daß die flüchtigen Produkte bei reduziertem Druck entfernt werden können. Die Nachkondensation erfolgt in einem Temperaturbereich von 280 bis 285 °C, bei einem reduzierten Druck von 0,27 bis 0,67 kPa. Auf diese Weise wird beispielsweise eine Viskositätszahl von 0,60 von Polyethylenterephthalatabfällen auf einen Wert von 0,67 erhöht.

In der DE-A-1 420 366 ist ein Verfahren zur Verwertung gewerblich unbrauchbarer linearer Polyesterkondensate aus Glykolen und aromatischen Dicarbonsäuren mit Molekulargewichten von etwa 2,500 bis 50,000 beschrieben. Bei diesem Verfahren werden in inerter Atmosphäre und bei einer Temperatur von 25 °C bis 50 °C über dem Siedepunkt des Glykols die Polykondensate unter Bedingungen vermischt, bei denen sich der Polyester völlig auflöst und alle vorhandenen oder gebildeten einwertigen Alkohole entfernt werden. Danach wird die erhaltene Monomeren-Mischung unter Bedingungen erhitzt, bei denen ein Vorkondensat erhalten wird. Die festen Partikel des Vorkondensats werden in einer inerten Atmosphäre durchmischt und bleiben freifließend. Sie werden auf eine Temperatur von etwa 10 °C bis 90 °C unterhalb des kristallinen Schmelzpunktes des Vorkondensats erhitzt, bis ein Molekulargewicht im Bereich von 14,000 bis 50,000 erreicht ist.

In zunehmendem Maße wird von der Industrie erwartet, daß sie ihr Engagement nicht mit der Herstellung von Produkten als beendet ansieht, sondern daß sie sich auch um die Entsorgung der Produkte nach deren Gebrauch bemüht. Ein wesentliches Problem bei der Rückführung von Kunststoffen ergibt sich durch den teilweisen Abbau der Kunststoffe bei ihrer Verarbeitung zu Gebrauchsprodukten. Infolge schlechterer optischer und mechanischer Eigenschaften nach dem Gebrauch verbietet sich im allgemeinen ein erneuter Einsatz bei der Herstellung von Produkten der gleichen Qualitätsstufe wie sie die Ausgangsprodukte hatten.

In der DE-OS 34 33 791 wird ein Verfahren zur Herstellung von in Extrudern verarbeitbarem thermoplastischem Kunststoffgranulat aus Abfallmaterial beschrieben, das bei der Extrusion von thermoplatischem Kunststoff anfällt, bei dem das Abfallmaterial zunächst zerschnitten und gegebenenfalls getrocknet wird, anschließend das zerschnittene Material verdichtet wird und danach das verdichtete Material in dem Extruder zuführbare Pellets zerkleinert wird. Bei diesem bekannten Verfahren wird im allgemeinen nur ein Abfallmaterial eines bestimmten Polymeren mit gleichbleibenden mechanischen, optischen und chemischen Eigenschaften wiederaufgearbeitet.

Aus der DE-AS 14 54 875 ist ein Verfahren zur Gewinnung von verdichtetem Material aus Kunststoffolien bzw. Kunststoffolien-Abfällen bekannt, bei dem die Kunststoffolien eingangs zerkleinert, dann in einer Agglomeriereinrichtung verdichtet werden, mittels einem Gebläse mit Förderleitung und Luftabscheider transportiert werden, wonach dann das verdichtete Material in einer Schneidmühle in Pellets zerkleinert wird, die in ihren Abmessungen in etwa den Abmessungen des Granulats des Polymerrohstoffs entsprechen.

In dem US-Patent 3,344,091 wird ein Verfahren zur Wiederverwendung von Polyester-Abfällen vorgeschlagen, bei dem die auf eine bestimmte Teilchengröße zerkleinerten Abfälle mit einem aromatischen Dicarbonsäureester und Glykol vermischt und auf eine 25 bis 50 °C über dem Siedepunkt des Glykols liegende Temperatur erhitzt werden. Nach Auflösung des Polyesters und Entfernung des Alkohols liegt ein Vorpolykondensat mit einem durchschnittlichen Polykondensationsgrad von kleiner als 10 vor, das bei weiterem Erhitzen in eine pulverförmige Masse umgewandelt wird. Diese pulverförmige Masse wird in einer inerten Atmosphäre einer Festphasenpolykondensation unterzogen. Dieses Verfahren basiert auf einem zweistufigen Prozeß, bei dem in der ersten Stufe der Abbau der Polymer-Abfälle zu einem niedermolekularen Produkt vollzogen wird, das in der zweiten Verfahrensstufe zu einem hochmolekularen Produkt polykondensiert wird. Auch bei diesem zweistufigen Verfahren, das einen Lösungs- bzw. Abbauschritt und einen Kondensationsschritt umfaßt, werden in erster Linie Abfälle eines einzigen Polymeren mit einem bestimmten Polykondensationsgrad einer Nachkondensation unterzogen. Der Einsatz von Polymeren-Abfällen mit unterschiedlichen Molmassen in einem Verfahrensschritt ist nicht vorgesehen.

Von den am meisten verbreiteten Kunststoffen Polyethylen, Polypropylen, Polystyrol, Polyvinylchlorid, Polyethylenterephthalat bieten nur die Polykondensate im allgemeinen, d.h. Polyethylenterephthalat, die Möglichkeit, den Abbau, der durch die Herstellung und den Gebrauch von daraus hergestellten Gegenständen stattfindet, durch einen bestimmten Verfahrensschritt wieder rückgängig zu machen.

Verschiedene Polyesterprodukte, wie Fasern, Flaschen, amorphe und biaxial orientierte Polyethylenterephthalat-Folien unterscheiden sich durch ihre Molmassen, den Additivgehalt und zum Teil durch Beschichtungen, insbesondere bei biaxial orientierten PET-Folien. Diese Produkte werden im allgemeinen aus thermoplastischen Polyestern hergestellt, wobei insbesondere die Polyesterrohstoffe für die Herstellung von Folien Polyester-Homo- und -Copolymere, Gemische verschiedener Polyester sowie Abmischungen und Blends von Polyestern mit anderen Polymeren sind.

Die Herstellung der Polyester kann sowohl nach dem Umesterungsverfahren mit bekannten Katalysatoren, wie Zn-, Ca-, Mn-, Li-, Ge-Salzen, oder nach dem Direktveresterungsverfahren erfolgen. Beispiele für Polyester sind das schon erwähnte ethylenterephthalat, Polytetramethylenterephthalat, Poly-1,4-cyclohexylendimethyl-terephthalat, Polyethylen-2,6-naphthalat.

Die Copolyester können als Bausteine Adipinsäure, Sebasinsäure, Phthalsäure, Isophthalsäure, Sulfoisophthalsäure und andere enthalten.

Beispiele für Polymere, die in den Polyester eingearbeitet werden können, sind Polyolefin-Homo- oder -Copolymere, wie Polypropylen, Poly-4-methylpenten, Ethylen-vinylacetat-copolymere, die ihrerseits verseift sein können, Ionomere, Polyamide, Polykarbonate, fluorhaltige Polymere.

Während die eher niedermolekularen Produkte, wie Fasern, biaxial orientierte PET-Folien, den höchsten Veredelungsgrad besitzen, in der Praxis die Beimischung von wiederaufgearbeitetem Material kaum vertragen, bestehen die amorphen PET-Folien aus hochmolekularem Polyethylenterephthalat. Die Hauptmenge des verarbeiteten Polyethylenterephthalats stellen die niedermolekularen Polyethylenterephthalate, da beispielsweise etwa die 12-fache Menge an biaxial orientierten PET-Folien im Vergleich zu amorphen PET-Folien zum Einsatz kommt. Daraus ergibt sich ein Überangebot an niedermolekularem PET-Abfall.

Aufgabe der Erfindung ist es, ein Verfahren der eingangs beschriebenen Art so zu verbessern, daß der Verfahrensablauf vereinfacht, die Verfahrensökonomie erhöht und sowohl Abfälle aus niedermolekularen als auch hochmolekularen Polyestern gemeinsam wiederaufgearbeitet werden können.

Die Aufgabe wird erfindungsgemäß dadurch gelöst, daß die Polyester-Abfälle, die unterschiedliche Molmasse und Veredelungsgrade aufweisen, vor dem Aufschmelzen gereinigt, sortiert und getrocknet werden, daß die Filtration bis zu einer Partikelgröße von 5 bis 10 µm erfolgt, daß die Molmasse der gefilterten Schmelze durch die Schmelzenachkondensation um 12 bis 150 % ansteigt, und daß das Schmelzenachkondensat granuliert und zusammen mit Originalrohstoffen zu Folien-, Spritz- und/oder Stranggußmaterial extrudiert wird.

Nach einer weiteren Lösung der Aufgabe wird der Häcksel aus Polyester-Abfällen mit unterschiedlichen Molmassen und Veredelungsgraden getrocknet und anschließend aufgeschmolzen, erfolgt die Filtration bis zu einer Partikelgröße von 5 bis 10 µm, wird die filtrierte Schmelze verfestigt und granuliert, das Granulat in fester Phase einer Nachkondensation unterzogen, bei der die Molmasse des Festphasenkondensats um 30 bis 150 % gegenüber der Ausgangsmolmasse des Granulats erhöht wird, und wird das aufkondensierte Granulat zusammen mit Originalrohstoff zu Folien-, Spritz- und/oder Stranggußmaterial extrudiert.

Die weitere Ausgestaltung der Erfindung ergibt sich aus den Merkmalen der Ansprüche 3 bis 10.

Durch den Verfahrensschritt der Nachkondensation wird die Molmasse bzw. der Polykondensationsgrad der niedermolekularen Polyester-Abfälle, wie beispielsweise der Abfälle aus biaxial orientierten PET-Folien, auf das Niveau der hochmolekularen Polyester-Abfälle, beispielsweise der Abfälle aus amorphen PET-Folien, erhöht, so daß die wiederaufgearbeiteten Abfälle bei der Herstellung neuer Produkte aus hochmolekularen Kunststoffen verwendet werden können.

Das Verfahrenskonzept für die Wiederaufarbeitung basiert auf dem Verfahrensschritt der Nachkondensation, der an und für sich bei der Produktion von hochmolekularem Originalrohstoff für Polyesterprodukte obligatorisch ist.

Mit dem erfindungsgemäßen Verfahren wird als wesentlicher Vorteil der Wiedereinsatz von Polyester-Abfällen aus verschiedenen Produktionen erzielt, wobei die üblichen Verluste in den mechanischen und optischen Eigenschaften durch Nachkondensation zum größten Teil wieder rückgängig gemacht werden können. Dabei können Abfälle von Produkten aus niedermolekularen Kunststoffen, wie Fasern und biaxial orientierte PET-Folien, mit Abfällen aus Kunststoffen, die praktisch keinen Verschnitt vertragen, zu Produkten aus hochmolekularen Kunststoffen verarbeitet werden, die infolge ihrer höheren Dicke und geringerem Veredelungsgrad nicht so empfindlich gegen feinste Verschmutzungen sind.

Im folgenden wird das Verfahren zur Aufbereitung und Wiederaufarbeitung von Polyester-Abfällen anhand eines Diagramms, ähnlich einem Flußdiagramm, näher erläutert. Das Diagramm zeigt die Verarbeitungsstufen Produktion - Verteilung - Sammlung - Zerkleinern - Aufbereitung - Schmelzen - Nachkondensation und Granulierung - neuer Rohstoff.

1. Produktion

Da sowohl bei den Fasern als auch bei den biaxial orientierten PET-Folien die Produkteigenschaften, wie mechanische Festigkeit und Glasklarheit, durch Verstrecken und Kristallisation erreicht werden, d.h. durch entsprechende Veredelungsschritte, genügt es im allgemeinen, als Ausgangsmaterial Polyester zu verwenden, wie sie bei der Polykondensation entstehen und die eine Molmasse - ausgedrückt durch den Spezifischen-Viskosität-Wert, bzw. abgekürzt SV-Wert - von 600 bis 800 aufweisen. Dieser Wert wird nach folgender Meßmethode bestimmt: Lösungsviskosität einer Lösung von

1 % PET in Dichloressigsäure bei 25 °C

$$SV=(\frac{\text{mittlere Durchlaufzeit der Lösung}}{\text{mittlere Durchlaufzeit des Lösungsmittels}}-1).1000$$

EP 0 483 665 B1

PET-Produkte → Verarbeiter → Verbraucher

Sonstige Kunststoffe → Verbraucher

Verbraucher → Abfall

Abfall → Häckseln → sortenrein, gering verschmutzt

gemischt, verschmutzt

Abfall → Häckseln → Aufbereiten, Reinigen, Sortieren, u. ä. → Reststoffe

Häckseln → Schmelzen Filtrieren

Aufbereiten, Reinigen, Sortieren, u. ä. → PET sortenrein, gering verschmutzt → Schmelzen Filtrieren

Schmelzen Filtrieren → Schmelzenachkondensation → Granulieren → hochwertiges PET

Schmelzen Filtrieren → Granulieren → Festphasennachkondensation → hochwertiges PET

Produktion    Sammlung    Aufbereitung    Nachkondensation und Granulierung    neuer Rohstoff

Verteilung    Zerkleinern    Schmelzen

Die Viskosität der Polymerrohstoffe wird u.a. als reduzierte spezifische Viskosität (RSV) angegeben. Ihre Messung erfolgt nach DIN 53728, Blatt 3.

Für biaxial orientierte Polyesterfolien liegt der RSV-Wert im allgemeinen zwischen 0,65 (SV ca. 790) und 0,80 dl/g (SV ca. 1000), wobei hohe RSV-Werte erreicht werden, wenn der Polyesterrohstoff vor der Verarbeitung zur Folie im Vakuum gut getrocknet wird. Dadurch wird ein Kettenabbau des Polyesters durch Hydrolyse während der Verarbeitung zur Folie reduziert. Außerdem muß darauf geachtet werden, daß kein wesentlicher Polymerkettenabbau durch eventuell zu hohe Scherkräfte während der Extrusion stattfindet.

Wird der Polyester z.B. zu wenig orientierten Folien, kristallisierten, jedoch nicht orientierten PET-Folien, Flaschen oder amorphen PET-Folien verarbeitet, so müssen die gewünschten hohen mechanischen Eigenschaften jedoch durch eine hohe Molmasse bzw. SV-Werte zwischen 1000 und 1200 erreicht werden (RSV = 0,8 bis 0,95 dl/g), wozu eine Nachkondensation erforderlich ist.

## 2. Verteilung

Die PET-Produkte oder Produkte aus sonstigen Kunststoffen gelangen an die Verbraucher direkt oder an Verarbeiter, die sie bedrucken, laminieren, beschichten, umformen, im Fall von Flaschen abfüllen und erst dann an die Verbraucher weitergeben.

## 3. Sammlung

Bei den Verarbeitern können Abfälle und Restware der PET-Produkte sortenrein gesammelt und als hochwertiger Werkstoff wieder an die Produzenten zurückgegeben werden.

Verarbeitete und/oder benutzte Ware, die durch Bedrucken, Bekleben mit Etiketten, Laminieren und ähnliche Maßnahmen bearbeitet wurden, oder von Verbrauchern gelieferte Abfälle, die meist mit anderen Kunststoffsorten gemischt sind, können erst nach speziellen Aufbereitungsverfahren wieder verwendet werden.

Sie müssen entsprechend aufbereitet, gereinigt und sortiert werden.

## 4. Zerkleinerung

Im allgemeinen lassen sich Abfälle im zerkleinerten Zustand besser transportieren, reinigen und sortieren. Dementsprechend werden die Abfälle gehäckselt und danach gereinigt. In speziellen Fällen ist es angebracht, das Häckseln erst nach dem Waschen vorzunehmen, beispielsweise wenn zuerst Etiketten und Schraubdeckel von Kunststoffflaschen entfernt werden oder abziehbare Laminate von dem Kunststoffprodukt abgetrennt werden müssen.

## 5. Aufbereitung

Sortenreines, gering verschmutztes PET-Material, wie beispielsweise Randschnitte und Restlängen, können häufig direkt wieder in den Produktionsprozeß zurückgeführt werden, falls eine gewisse Verschmutzung durch Staub, Verstippung und eine geringere mechanische und optische Qualität in Kauf genommen werden kann. Gemischter und stärker verschmutzter Abfall aus verschiedenen Polyestermaterialien muß vor den weiteren Verfahrensstufen so behandelt werden, daß ein sortenreines, gering verschmutztes PET anfällt. Mögliche Maßnahmen hierfür sind:

- Waschen mit Wasser zum Entfernen von Schmutz, mit Natronlauge zum Entfernen von Papieretiketten, mit Kohlenwasserstoff zum Entfernen von Klebeschichten und Beschichtungen,
- Sortieren mittels Zyklonen, Sedimentation, Flotation, elektrostatische bzw. magnetische Abscheider,
- Lösen in Lösungsmittel und fraktionierte Fällungen.

Die erhaltenen Reststoffe werden vor der weiteren Verarbeitung abgetrennt. Ob nicht entfernbare Restpolymere, beispielsweise Laminate, bei der Weiterverarbeitung von PET-Material stören, muß jeweils gesondert geprüft werden, und falls dies der Fall ist, müssen diese Restpolymere gleichfalls, wie die übrigen Reststoffe, vor der weiteren Verarbeitung abgetrennt werden.

## 6. Schmelzen

Nach erfolgter Aufbereitung wird der Häcksel aus PET-Abfällen aufgeschmolzen. Bevor es zum Schmelzen kommt, was eine stärkere thermische Beanspruchung des aufbereiteten PET-Materials mit sich bringt, wird eine Trocknung vorgenommen, beispielsweise im Vakuum, um einen Kettenabbau des Polyesters durch Hydrolyse während der weiteren Verarbeitung zu verhindern oder zu minimieren. Der Häcksel wird aufgeschmolzen und durch Filtrieren von Verschmutzungen bis zu einer Partikelgröße von 5 bis 10 μm befreit.

## 7. Nachkondensation und Granulierung

Die filtrierte Schmelze wird entweder als Schmelze nachkondensiert oder erstarrt und wird für eine nachfolgende Festphasennachkondensation granuliert.

Die Schmelzenachkondensation erfolgt kontinuierlich in einem Entgaser mit Käfigrührern, bei einer Temperatur über dem Schmelzpunkt von PETP im Bereich von 270 ° bis 310 °C, insbesondere von ca. 280 ° bis 295 °C. Während der Schmelzenachkondensation wird die Molmasse der filtrierten Schmelze um 12 bis 150 % gegenüber der Ausgangsmolmasse der filtrierten Schmelze erhöht. Der Unterdruck liegt zwischen 0,5 und 5 mbar, und die Verweilzeit der Schmelze beträgt 1 bis 4 Stunden. Abhängig von der angestrebten Erhöhung der Molmasse, ausgedrückt durch den SV-Wert, ist ein Unterdruck von 1,5 bis 2 mbar, bei einer 0,5-bis 1,5-stündigen Temperaturbehandlung zwischen 280 ° und 295 °C, für eine Erhöhung des SV-Wertes von ca. 800 auf 1050 und von 3 bis 5 mbar, für eine Erhöhung des SV-Wertes von etwa 800 auf 950, bei einer Verweilzeit von 1 bis 2 Stunden, erforderlich. Das granulierte Schmelzenachkondensat wird einem Extruder zugeleitet und zusammen mit dem Originalrohstoff zu Folien- Spritz- und/oder Stranggußmaterial extrudiert.

Wird die filtrierte Schmelze granuliert und anschließend einer Festphasennachkondensation unterzogen, so ist hierfür ein in der Form und Größe relativ einheitliches Granulat erforderlich, da die Nachkondensation durch Diffusion erfolgt und dementsprechend gesteuert wird. Ist das Granulat unregelmäßig, so ist dann das erhaltene Produkt nach der Festphasennachkondensation bezüglich seiner Molmasse mit einer großen Schwankungsbreite behaftet.

Die Festphasennachkondensation erfolgt beispielsweise in kontinuierlicher Weise in einem Fließbettreaktor mit einem inerten Gas, wie z.B. Stickstoff als Wärmeträger und Spülgas. Die Temperatur beträgt zwischen 210 und 230 °C, und die Verweilzeit liegt bei ca. 8 Stunden, wenn der SV-Wert von etwa 800 auf 1050 erhöht werden soll.

Die Festphasenkondensation kann auch diskontinuierlich in einem Taumeltrockner bei einem Unterdruck von etwa 0,1 mbar über eine Zeitspanne von etwa 12 Stunden betrieben werden. Die Temperatur liegt dann im Bereich zwischen 225 und 235 °C, und der SV-Wert wird von etwa 800 auf 1050 erhöht. Eine diskontinuierliche Festphasenkondensation bietet sich vor allem bei sehr unterschiedlichen Ausgangswerten und -mengen des wiederaufzuarbeitenden Kunststoffes an. Wegen der großen Variabilität der kontinuierlichen Festphasenkondensation ist sie vor allem dann von Vorteil, wenn ständig wechselnde Molmassen, Pigmente und Additive in den Abfällen vorkommen. Allgemein ist die Festphasenkondensation von Vorteil, wenn ein geringer Gehalt an Oligomeren, Acetaldehyd, Carboxylendgruppen sowie eine hohe Glasklarheit des wiederaufbereiteten Materials verlangt wird.

## 8. Neuer Rohstoff

Je nach den Betriebsbedingungen bei der Nachkondensation läßt sich der wiederaufbereitete Kunststoff folgendermaßen einsetzen:

| Abfall aus/SV-Wert | Neuer SV-Wert | Einsatz |
|---|---|---|
| BOPET-Folien/600-800 | 700-900 | Verbesserung der Verschnittqualität, da Viskositätsniveau dem Originalrohstoff angepaßt |
| BOPET-Folien/600-800 | 950-1100 | Einsatz des BOPET-Abfalls für APET-Folien |
| BOPET-Folien/600-800 | 1100-1250 | Einsatz des BOPET-Abfalls für CPET-Folien |
| APET-Folien/900-1100 | 1000-1100 | Verbesserung der Verschnittqualität da Viskositäts- und |
| PET-Flaschen/900-1100 | 1000-1100 | Eigenschaftswerte dem Originalrohstoff angepaßt. |
| BOPET-Folie = biaxial orientierte PET-Folie<br>APET-Folie = amorphe PET-Folie<br>CPET-Folie = kristallisierte, jedoch nicht orientierte Folie | | |

Falls nur sehr geringe Qualitätsanforderungen an das wiederaufbereitete Kunststoffmaterial gestellt werden, kann in der Praxis auch nicht aufkondensiertes amorphes PET-Material bis zu 80 Gew.% dem frischen Originalrohstoff der Basisschicht einer koextrudierten Folie beigefügt werden, und die Basisschicht mit dünnen Deckschichten aus Originalrohstoff abgedeckt werden, um die Optik zu verbessern. Da aber die Deckschichten niederviskoser sein müssen als die Basisschicht, sind die mechanischen Eigenschaften solcher Folien deutlich schlechter als der Folien, bei denen wiederaufgearbeiteter, aufkondensierter Kunststoff dem Originalrohstoff der Basisschicht hinzugefügt ist.

**Patentansprüche**

1. Verfahren zur Aufbereitung thermisch beanspruchter Polyester-Abfälle für die Wiederverwendung bei der Produktion von hochwertigen PET-Kunststoffartikeln, bei dem die Polyester-Abfälle während der Aufbereitung gehäckselt und aufgeschmolzen werden, die Schmelze durch Filtrieren von Verschmutzungen befreit wird und die Molmasse der filtrierten Schmelze durch eine Schmelzenachkondensation gegenüber der Ausgangsmolmasse der filtrierten Schmelze erhöht wird, dadurch gekennzeichnet, daß die Polyester-Abfälle, die unterschiedliche Molmassen und Veredelungsgrade aufweisen, vor dem Aufschmelzen gereinigt, sortiert und zur Vermeidung eines Kettenabbaus durch Hydrolyse getrocknet werden, daß die Filtration bis zu einer Partikelgröße von 5 bis 10 µm erfolgt, daß die Molmasse der gefilterten Schmelze durch die Schmelzenachkondensation um 12 bis 150 % ansteigt, und daß das Schmelzenachkondensat granuliert und zusammen mit Originalrohstoff zu Folien-, Spritz- und/oder Stranggußmaterial extrudiert wird.

2. Verfahren zur Aufbereitung thermisch beanspruchter Polyester-Abfälle für die Wiederverwendung bei der Produktion von hochwertigen PET-Kunststoffartikeln, bei dem die Polyester-Abfälle während der Aufbereitung gehäckselt, gereinigt, sortiert und aufgeschmolzen werden, die Schmelze durch Filtrieren von Verschmutzungen befreit wird, dadurch gekennzeichnet, daß der Häcksel aus Polyester-Abfällen mit unterschiedlichen Molmassen und Veredelungsgraden getrocknet und anschließend aufgeschmolzen wird, daß die Filtration bis zu einer Partikelgröße von 5 bis 10 µm erfolgt, daß die filtrierte Schmelze verfestigt und granuliert wird, daß das Granulat in fester Phase einer Nachkondensation unterzogen wird, bei der die Molmasse des Festphasenkondensats um 30 bis 150 % gegenüber der Ausgangsmolmasse des Granulats erhöht wird, und daß das aufkondensierte Granulat zusammen mit Originalrohstoff zu Folien- Spritz- und/oder Stranggußmaterial extrudiert wird.

3. Verfahren nach Anspruch 1, dadurch gekennzeichnet, daß die Schmelzenachkondensation kontinuierlich unter Umrühren und Entgasen bei einer Temperatur über dem Schmelzpunkt von PETP im Bereich von 270 ° bis 310 °C, insbesondere zwischen 280 und 295 °C und Unterdruck durchgeführt wird.

4. Verfahren nach Anspruch 3, dadurch gekennzeichnet, daß der Unterdruck in einem Bereich von 0,5 bis 5 mbar liegt und daß die Verweilzeit der Schmelze 1 bis 4 Stunden beträgt.

5. Verfahren nach den Ansprüchen 1, 3 und 4, dadurch gekennzeichnet, daß die spezifische Viskosität (SV) bei einem Unterdruck von 1,5 bis 2 mbar und einer 0,5- bis 1,5-stündigen Temperaturbehandlung im Bereich von 280 bis 295 °C von einem SV-Wert von etwa 800 auf 1050 erhöht wird.

6. Verfahren nach den Ansprüchen 1, 3 und 4, dadurch gekennzeichnet, daß die spezifische Viskosität (SV) bei einem Unterdruck von 3 bis 5 mbar und einer 1- bis 2-stündigen Temperaturbehandlung im Bereich von 280 bis 295 °C von einem SV-Wert von etwa 800 auf 950 erhöht wird.

7. Verfahren nach Anspruch 2, dadurch gekennzeichnet, daß die Festphasenkondensation in kontinuierlicher Weise in einem Fließbettreaktor mit inerten Gasen, insbesondere Stickstoff als Wärmeträger und Spülgas erfolgt.

8. Verfahren nach Anspruch 7, dadurch gekennzeichnet, daß die Betriebstemperatur der Festphasenkondensation 200 bis 250 °C, vorzugsweise 210 ° bis 230 °C, beträgt und die Verweilzeit bei ca. 8 Stunden liegt, um den SV-Wert von etwa 800 auf 1050 zu erhöhen.

9. Verfahren nach Anspruch 2, dadurch gekennzeichnet, daß die Festphasenkondensation diskontinuierlich, bei einem Unterdruck von 0,1 mbar über eine Zeitspanne von etwa 12 Stunden zur Erhöhung des SV-Wertes von etwa 800 auf 1050 betrieben wird.

10. Verfahren nach Anspruch 9, dadurch gekennzeichnet, daß die Festphasenkondensation in einem Taumeltrockner bei 200 ° bis 250 °C, vorzugsweise bei 225 bis 235 °C, durchgeführt wird.

**Claims**

1. Process for reclaiming thermally strained polyester waste material for reuse in the production of high-quality PET plastic articles, in which process the polyester waste material is shredded and remolten during reclamation, the melt is freed from impurities by filtering, and the molar mass of the filtered melt is increased over the initial molar mass of the filtered melt by means of melt post-condensation, characterized in that the polyester waste material, having different molar masses and degrees of conversion, is cleaned, sorted and dried to prevent chain reduction by hydrolysis, that filtering is performed down to a particle size of 5 to 10 μm, that the molar mass of the filtered melt is increased by 12 to 150 % due to the melt post-condensation, and that the melt post-condensate is granulated and extruded together with virgin raw material to give cast films or other cast and/or molded articles.

2. Process for reclaiming thermally strained polyester waste material for reuse in the production of high-quality PET plastic articles, in which process the polyester waste material is shredded, cleaned, sorted and remolten during reclamation, the melt is freed from impurities by filtering, characterized in that the shredded polyester waste material, having different molar masses and degrees of conversion, is dried and subsequently molten, that filtering is performed down to a particle size of 5 to 10 μm, that the filtered melt is solidified and granulated, that the solid-phase granulate is subjected to post-condensation during which the molar mass of the solid-phase granulate is increased by 30 to 150 % over the initial molar mass of the granulate, and that the condensed granulate is extruded together with virgin raw material to give cast films or other cast and/or molded articles.

3. Process as claimed in claim 1, characterized in that the melt post-condensation is performed continuously with agitating and degassing at a temperature above the melting point of PETP, in the range of 270 to 310 °C, in particular of 280 to 295 °C, and at a reduced pressure.

4. Process as claimed in claim 3, characterized in that a reduced pressure of 0.5 to 5 mbar is applied and the treatment time of the melt is 1 to 4 hours.

5. Process as claimed in any of claims 1, 3 and 4, characterized in that the specific viscosity (SV) is increased from a value of about 800 to a value of about 1,050, at a reduced pressure of 1.5 to 2 mbar, a treatment time of 0,5 to 1.5 hours and a temperature of 280 to 295°C.

6. Process as claimed in any of claims 1, 3 and 4, characterized in that the specific viscosity (SV) is increased from a value of about 800 to a value of about 950, at a reduced pressure of 3 to 5 mbar, a treatment time of 1 to 2 hours and a temperature of 280 to 295 °C.

7. Process as claimed in claim 2, characterized in that the solid phase condensation is performed continuously in a fluidized bed apparatus, using inert gases, in particular nitrogen, as heat transfer agent and flushing gas.

8. The process as claimed in claim 7, characterized in that the operating temperature for the solid phase condensation is in the range of 200 to 250 °C, preferably of 210 to 230 °C, and the treatment time is about 8 hours, in order to raise the SV value from about 800 to 1,050.

9. The process of claim 2, characterized in that the solid phase condensation is performed discontinuously and a reduced pressure of 0.1 mbar is applied over a period of about 12 hours to increase the SV value from about 800 to 1,050.

10. The process of claim 9, characterized in that the solid phase condensation is performed in a tumbler drier at 200 to 250 °C, preferably at 225 to 235 °C.

**Revendications**

1. Procédé de récupération de déchets de polyester fatigués thermiquement en vue de la production d'articles en matière plastique à base de poly(téréphtalate d'éthylène), de haute valeur ajoutée, dans lequel les déchets de polyester sont déchiquetés puis fondus en cours de traitement, la matière fondue est libérée des substances contaminantes par filtration, la masse molaire de la matière fondue filtrée étant augmentée par condensation ultérieure en fusion par rapport à la masse molaire de départ de la matière fondue filtrée, caractérisé en ce que les déchets de polyester qui présentent des masses molaires et des degrés de pureté différents, sont purifiés avant fusion, triés et séchés afin d'éviter un clivage des chaînes en cours d'hydrolyse, en ce que la filtration est réalisée de façon à obtenir une taille particulaire comprise entre 5 et 10 μm, en ce que la masse molaire de la matière fondue filtrée est augmentée de 12 jusqu'à 150 % par condensation ultérieure à l'état fondu, et en ce que le condensat résultant de la condensation ultérieure à l'état fondu est broyé puis, ensemble avec le produit de départ d'origine, est extrudé sous la forme de feuilles, de pièces moulées par injection et/ou de matériau de forme continue.

2. Procédé de récupération de déchets de polyester fatigués thermiquement en vue de la production d'articles en matière plastique à base de poly(téréphatalate d'éthylène), de haute valeur ajoutée, dans lequel les résidus de polyester sont déchiquetés, purifiés, triés et fondus en cours de traitement, la matière en fusion étant libérée des substances contaminantes par filtration, caractérisé en ce que la matière déchiquetée à base des déchets de polyester présentant des masses molaires et des degrés de pureté différents, est séchée puis fondue, en ce que la filtration est réalisée de façon à obtenir une taille particulaire comprise entre 5 et 10 µm, en ce que la matière fondue filtrée est compactée et broyée, en ce que la matière broyée est soumise à l'état solide à une condensation ultérieure, ce par quoi la masse molaire des produits de condensation à l'état solide est augmentée de 30 jusqu'à 150 % par rapport à la masse molaire de départ de la matière broyée, et en ce que la matière broyée condensée ensemble avec le produit de départ d'origine, est extrudée sous la forme de feuilles, de pièces moulées par injection et/ou de matériau de forme continue.

3. Procédé selon la revendication 1, caractérisé en ce que la condensation ultérieure à l'état fondu est réalisée de façon continue sous agitation et dégazage à une température supérieure à la température de fusion des produits à base de poly(téraphtalate d'éthylène) comprise entre 270 et 310° C, plus particulièrement entre 280 et 295° C, et sous pression.

4. Procédé selon la revendication 3, caractérisé en ce que la pression est comprise entre 0,5 et 5 mbar et en ce que la fusion se prolonge pendant 1 à 4 heures.

5. Procédé selon les revendications 1, 3 et 4, caractérisé en ce que la viscosité spécifique (VS) passe d'une valeur d'environ 800 à 1050 par traitement thermique entre 280 et 295° C sous une pression de 1,5 à 2 mbar, le traitement thermique étant poursuivi pendant 0,5 jusqu'à 1,5 heure.

6. Procédé selon les revendications 1, 3 et 4, caractérisé en ce que la viscosité spécifique (VS) passe d'une valeur d'environ 800 à 950 par traitement thermique à une température comprise entre 280 et 295° C sous une pression de 3 à 5 mbar, le traitement thermique se poursuivant pendant 1 à 2 heures.

7. Procédé selon la revendication 2, caractérisé en ce que la condensation à l'état solide est réalisée de façon continue dans un réacteur à lit fluidifié en utilisant un gaz inerte, plus particulièrement l'azote, en tant qu'agent caloporteur et gaz de balayage.

8. Procédé selon la revendication 7, caractérisé en ce que la température de fonctionnement pour la condensation à l'état solide est comprise entre 200 et 250° C, de préférence entre 210 et 230° C, la durée de cette opération étant d'environ 8 heures, de façon à augmenter la valeur de la viscosité spécifique (VS) d'environ 800 à 1050.

9. Procédé selon la revendication 2, caractérisé en ce que la condensation à l'état solide est réalisée de façon discontinue sous une pression de 0,1 mbar pendant une durée d'environ 12 heures de façon à augmenter la valeur de la viscosité spécifique (VS) d'environ 800 à 1050.

10. Procédé selon la revendication 9, caractérisé en ce que la condensation à l'état solide est réalisée dans un dispositif de séchage oscillant entre 200 et 250° C, de préférence entre 225 et 235° C.